# EUROPÄISCHE PATENTSCHRIFT

(11) **EP 0 490 817 B1**
(45) Veröffentlichungstag und Bekanntmachung des Hinweises auf die Patenterteilung: **11.09.1996**
(21) Anmeldenummer: 91810941.4
(22) Anmeldetag: 03.12.1991
(51) Int. Cl.: G11B 7/24

(54) **Verfahren zur Speicherung von Informationen mit hoher Speicherdichte**
Method for the storage of information with high storage density
Méthode pour l'emmagasinage des données avec haute densité d'emmagasinage

(30) Priorität: 12.12.1990 CH 3924/90
(43) Veröffentlichungstag der Anmeldung: 17.06.1992
(73) Patentinhaber: CIBA-GEIGY AG, 4002 Basel (CH)
(72) Erfinder: Mizuguchi, Jin, Dr., CH-1700 Freiburg (CH); Rochat, Alain Claude, Dr., CH-1700 Freiburg (CH); Giller, Gérald, CH-1630 Bulle (CH)

(56) Entgegenhaltungen:
- EP-A- 0 340 968
- EP-A- 0 384 665
- EP-A- 0 401 791
- US-A- 4 415 685
- PATENT ABSTRACTS OF JAPAN vol. 7, no. 202 (P-221)7. September 1983

## Beschreibung

Die vorliegende Erfindung betrifft ein Verfahren zur Speicherung von Informationen (WORM: "Write Once Read Many"), ein Verfahren zum Ablesen dieser Informationen, das so beschriftete Material, sowie bestimmte, für das Verfahren geeignete optische Aufzeichnungsträger. Das Prinzip der Informationsspeicherung basiert auf der Änderung der optischen Eigenschaften des Aufzeichnungsmaterials durch Behandlung mit organischen Verbindungen, welche Lösungsmitteleffekte bewirken.

Optische Aufzeichnungsträger und -medien zur Speicherung von Informationen sind bekannt. [Vgl. z.B. "Farbmittel/Polymer-Systeme als Datenspeicher" von G. Kämpf et al, in Kunststoffe S. 1077-1081, Carl Hanser Verlag, München 1986; oder "Erasable laser recording in an organic dye-binder optical disk medium", von M.C. Gupta et al, in J. Appl. Phys. 60 (8), 1986, S. 2932-2937.] Dabei erfolgt das Aufzeichnen der Informationen durch Behandlung mit Licht bestimmter Wellenlängen und Intensität oder mit anderen geeigneten energiereichen Strahlen, wie z.B. mit einem Laser. Durch Absorption der Strahlung tritt an den bestrahlten Stellen lokale Erwärmung ein, so dass an der Oberfläche des Aufzeichnungsträgers und/oder -mediums durch Verdampfen, Erweichen oder Schmelzen Vertiefungen oder lokale Phasenumwandlungen erzeugt werden, welche zu einer Veränderung des Brechungsindexes, der Absorption oder der Reflexion führen. Mittels Laser lassen sich z.B. Löcher, Blasen oder Vertiefungen von etwa 1 bis mehrere µm² Grösse erzeugen, wobei das Ablesen dieser Informationen ebenfalls mittels eines Lasers geringerer Intensität unter Ausnutzung des geänderten Reflexions- bzw. Lichtstreuverhaltens dieser Löcher/Blasen/Vertiefungen oder Phasenumwandlung geschieht. Geeignete Aufzeichnungsmaterialien sind z.B. Metalle, Metalloxide, Kunststoffe oder sonstige lichtabsorbierende Schichten enthaltend z.B. Farbstoffe.

So werden z.B. in den US 4,307,047 und 4,391,764 zur Beschriftung von spritzgegossenen Kunststoffteilen strahlungsempfindliche Zusatzstoffe, wie Wärmestrahlungsindikatoren, Russ oder Graphit, dem Kunststoff beigemengt, so dass an den bestrahlten Stellen eine visuelle Markierung erzeugt wird.

Es ist weiterhin gemäss der EP-A-190,997 bekannt, hochmolekulare organische Materialien durch Verwendung von Pigmenten oder polymerlöslichen Farbstoffen unter Laserbestrahlung so zu beschriften, dass dabei die Oberfläche des beschrifteten Materials von Auge erkennbar nicht beschädigt wird.

Es ist ferner auch bekannt, die Lichtabsorption bestimmter organischer Verbindungen als getrennte Schicht oder in einem Substrat eingebaut, durch Lösungsmitteldampfbehandlung zu verändern bzw. zu verschieben. So wird die Lichtabsorption von Polymerfilmen enthaltend z.B. Vanadylphthalocyaninfarbstoffe durch Lösungsmitteldampfbehandlung nach längeren Wellenlängen verschoben [vgl. J. of Physical Chemistry, Vol. 89, Nr. 12, S.2652-2657 (1985)], währenddem eine entsprechende Lösungsmittelbehandlung von 1,4-Dithioketo-3,6-diphenyl-pyrrolo-[3,4-c]-pyrrol die Lichtabsorption in den nahen IR-Bereich (NIR) verschiebt [vgl. J. of Imaging Science, Vol. 32, Nr. 3, Mai/Juni 1988, S. 135-140]. Im letztgenannten Dokument wird ausserdem noch erwähnt, eine derartige Eigenschaft bzw. die daraus im NIR-Spektralbereich resultierende Veränderung der Photoleitfähigkeit der so behandelten Filme in elektrophotographischen Applikationen zu verwenden.

Die EP-A-401,791, welche nicht vorpubliziert ist, offenbart, dass man die Veränderung des Absorptionsspektrums und/oder die Veränderung der Photoleitfähigkeit bestimmter organischer Verbindungen nach deren Behandlung mit einem organischen Lösungsmittel vorteilhaft zur Speicherung von Informationen anwenden kann. Dabei wird die Oberfläche der organischen Aufzeichnungsschicht entsprechend der Form der zu markierenden Information mit einem organischen Lösungsmittel im flüssigen oder gasförmigen Zustand behandelt, z.B. durch Besprühen der Oberfläche aus einer Düse, wie beispielsweise einer Tintenstrahldrucker-("ink-jet-printer")-Einrichtung.

Es wurde nun gefunden, dass eine wesentlich höhere Speicherdichte möglich ist, wenn das Lösungsmittel unter Einwirkung von Laserstrahlen im Aufzeichnungsmaterial lokal freigesetzt wird.

Die vorliegende Erfindung betrifft demnach ein Verfahren zur Speicherung von Informationen in einer organischen Aufzeichnungsschicht durch lokale Behandlung mit einem organischen Lösungsmittel entsprechend der Form der zu markierenden Information um ihr Absorptionsspektrum und/oder ihre Photoleitfähigkeit so zu verändern, dass an den behandelten Stellen dieser Schicht Informationen erzeugt bzw. gespeichert werden, dadurch gekennzeichnet, dass das organische Lösungsmittel bei Raumtemperatur fest ist und in der Aufzeichnungsschicht enthalten ist, und dass das Lösungsmittel entsprechend der Form der zu markierenden Information unter Einwirkung von Laserstrahlen verdampft wird oder schmilzt.

In einer alternativen Ausführungsform, welche ebenfalls Gegenstand vorliegender Erfindung ist, wird das organische Lösungsmittel durch photochemische oder thermische Zersetzung einer festen, in der Aufzeichnungsschicht enthaltenen organischen Vorläuferverbindung gebildet, wobei diese Zersetzung unter Einwirkung von Laserstrahlen erfolgt.

Mit dem erfindungsgemässen Verfahren kann eine hohe Speicherdichte erreicht werden. So ist ohne weiteres eine Vertiefung ("Pit") von unter einem µm² möglich. Das erfindungsgemässe System eignet sich insbesondere für eine einmal beschreibbare Speicherung ("WORM") und ist wegen der hohen Reflektivität besonders für das schreibbare "Compact-Disc"-System geeignet.

Die organische Aufzeichnungsschicht enthält definitionsgemäss das Aufzeichnungsmaterial selber sowie das feste organische Lösungsmittel oder die feste organische Vorläuferverbindung.

Als organisches Aufzeichnungsmaterial kommen z.B. Chinacridone, Dithiochinacridone, Chinacridonchinone, Phthalocyanine, Diketo-, Monoketomonothioketo- und insbesondere Dithioketo-pyrrolopyrrole in Frage, welche durch Lösungsmittelbehandlung ihr Absorptionsspektrum und/oder ihre Photoleitfähigkeit verändern können.

Beispiele von geeigneten Pyrrolopyrrolen sind 1,4-Diketo-3,6-diphenyl-pyrrolo-[3,4-c]-pyrrole (vgl. z.B. US 4,415,685) oder die entsprechenden 1,4-Dithioketo-3,6-diphenylpyrrolopyrrole (vgl. z.B. US 4,632,893).

Als Chinacridone eignen sich z.B. Derivate der Formeln I und II 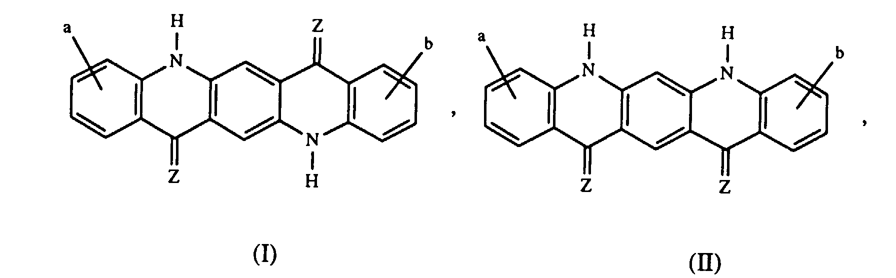 worin a und b -H, -F, -Cl, -Br, -CH₃ oder -OCH₃ sind, und Z für O oder S steht. Ebenfalls geeignet ist das Chinacridonchinon der Formel

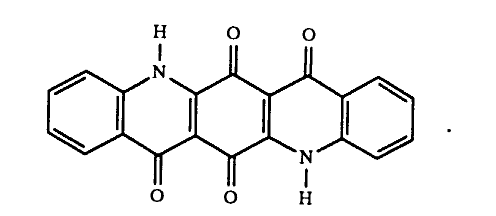

Bevorzugte Chinacridone sind unsubstituierte Dithiochinacridone gemäss obigen Formeln I und II, wobei a und b -H und Z S sind.

Geeignete Phthalocyanine sind z.B. Metallphthalocyanine, wie Titanyl-, Indium-, Chlorindium-, Aluminium-, Magnesium- und insbesondere Vanadyl-phthalocyanin sowie metallfreies Phthalocyanin, ferner metallfreie oder metallhaltige Naphthalocyanine, z.B. Titanyl-, Indium-, Chlorindium-, Aluminium-, Magnesium-, Kupfer-, Nickel- und Vanadyl-Naphthalocyanin.

Bevorzugte 1,4-Dithioketo-, 1-Monoketo-4-monothioketo- und 1,4-Diketo-3,6-diphenylpyrrolo-[3,4-c]-pyrrole haben die folgende Formel III 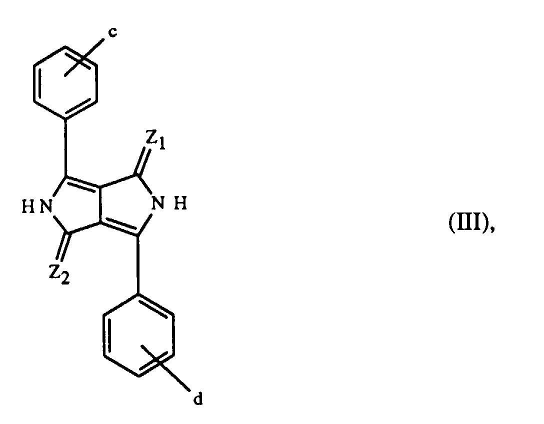 worin Z₁ und Z₂ unabhängig voneinander O oder S bedeuten, und c und d unabhängig voneinander -H, -Cl, -Br, -CH₃, -OCH₃, -N(CH₃)₂, -SC₆H₅ oder -S-Alkyl mit 1 bis 12 C-Atomen sind. Z₁ und Z₂ bedeuten bevorzugt S.
C₁-C₁₂-Alkyl ist z.B. Methyl, Ethyl, n-Propyl, n-Hexyl, n-Decyl und insbesondere n-Dodecyl.

Erfindungsgemäss ganz bevorzugt ist die Verbindung der Formel III, worin Z₁ und Z₂ Schwefel und c und d -H bedeuten (nachstehend als DTPP abgekürzt).

Gemische von Pyrrolopyrrolen obiger Strukturen, Gemische von Chinacridonen, Dithiochinacridonen oder Phthalocyaninen, sowie auch Gemische dieser Pigmentklassen, können ebenfalls verwendet werden.

Zweckmässig werden gereinigte Aufzeichnungsmaterialien eingesetzt, z.B. nach Umkristallisation in einem geeigneten inerten organischen Lösungsmittel.

Für das vorliegende Verfahren geeignete feste organische Lösungsmittel haben vorzugsweise einen Schmelzpunkt von über 90°C. Darunter sind beispielsweise Ketone, wie z.B. Benzil, Benzoin, Anthron, Dimedon, 4,4'-Dimethoxybenzil, Fluoren-9-on, 1,3-Indandion oder Tetraphenyl-2,4-cyclopentadien-1-on; Ketone des Typs der Phenone, wie z.B. 4-Acetamidoacetophenon, 3-Aminoacetophenon, 4-Aminoacetophenon, 2-Aminobenzophenon, 4-Aminobenzophenon, 2-Amino-5-chlorbenzophenon, 4-Aminopropiophenon, 2,4-Dihydroxybenzophenon, 4,4'-Dihydroxybenzophenon, 4,4'-Dimethoxybenzophenon, 4-Hydroxybenzophenon, 4-Hydroxypropionphenon oder 4-Phenylacetophenon; Aldehyde, wie z.B. 4-Acetamidobenzaldehyd, 3,4-Dihydroxybenzaldehyd, 3,5-Dimethoxy-4-hydroxy-benzaldehyd, 4-(Dimethylamino)zimtaldehyd oder 4-Hydroxybenzaldehyd; Heterozyklen, wie z.B. 2-Thiazolin-2-thiol, N-Thiazol-2-ylsulfanilamid, 2-Acetylpyrrol, 2-Aminobenzothiazol, Cumarin, 2,2-Dimethyl-1,3-dioxan-4,6-dion, Hydantoin, 4-Hydroxycumarin, 7-Hydroxycumarin, Hydroxy-2-methyl-pyranon, Isatin, 2-Aminobenzothiazol, 2-Mercaptobenzothiazol, 2-Mercaptobenzoxazol, 2-Methylbenzimidazol, 2-Methylimidazol, 3-Methylindol, 3-Methyl-1-phenyl-2-pyrazolin-5-on, Oxindol, Phenothiazin, 2-Phenylimidazol, 4-Phenylurazol, Phthalazon, Tetrahydrofuran-2,4-dion, 1,1′-Thiocarbonyldiimidazol, Thioxothiazolidin-4-on, Xanthon, Thianthren, 4-Amino-antipyrin oder (4S,5R)-(+)-1,5-Dimethyl-4-phenylimidazolin-2-on; Amide, bzw. Hydrazide, wie z.B. 2-Aminobenzamid, 4-Aminobenzamid, 3-Aminocrotonsäureamid, 2-Aminocyanacetamid, Benzamid, Cyanacetamid, 2-Ethoxybenzamid, Nicotinsäureamid, Thioacetamid, Thiobenzamid, Essigsäure-2-phenylhydrazid oder Oxalsäurebis(cyclohexylidenhydrazid); Anilide, wie z.B. Acetanilid, 4-Aminoacetanilid, Benzanilid oder 4-Methylacetanilid; Imide, wie z.B. N-Hydroxy-5-norbornen-2,3-dicarbonsäureimid, N-Hydroxyphthalimid, N-Hydroxysuccinimid, Maleinimid, Malonsäureimid oder 1,2,3,6-Tetrahydrophthalimid; Carbonsäuren, wie z.B. 2-Acetylbenzoesäure, Acetylsalicylsäure, Adipinsäure, D-(+)-Aepfelsäure, 4-Aminobuttersäure, 2-Amino-5-chlorbenzoesäure, 4-Aminohippursäure, 6-Aminohexansäure, 3-Benzoylpropionsäure, Dehydracetsäure, L(+)-Dehydroascorbinsäure, Hippursäure, 2-Iodhippursäure, DL-Mandelsäure, R-(-)-Mandelsäure, Mercaptobernsteinsäure, 3-Oxoglutarsäure, (S)-(-)-N-(1-Phenylethyl)phthalamidsäure oder Malonsäure; Chinone, wie z.B. Acenaphthenchinon, Anthrachinon, 2,3-Dichlor-5,6-dicyan-p-benzochinon, 1,4-Dihydroxyanthrachinon, 2-Ethylanthrachinon, 1,4-Naphthochinon, 9,10-Phenanthrenchinon, Tetramethyl-p-benzochinon oder Menadion; Harnstoffe, wie z.B. N,N-Dimethylharnstoff, Harnstoff, N-Methylharnstoff, N-Phenylharnstoff, 4-Phenylsemicarbazid oder 1-Phenylsemicarbazid; Thioharnstoffe, wie z.B. N-Acetylthioharnstoff, Thioharnstoff, N-Phenylthioharnstoff, Thiocarbohydrazid, Thiobiuret, 1-Phenylthiosemicarbazid, 4-Phenylthiosemicarbazid oder Thiosemicarbazid; Anhydride, wie z.B. Bernsteinsäureanhydrid, 3-Nitrophthalsäureanhydrid, Phthalsäureanhydrid, 1,2,3,6-Tetrahydrophthalsäureanhydrid oder Epiclon®B-4400 (Dainippon); Sulfone, wie z.B. 2,3-Dihydro-1,2-benzisothiazol-3-on-1,1-dioxid, 4,6-Diphenylthieno(3,4-d)-1,3-dioxol-2-on-5,5-dioxid oder Diphenylsulfon; Sulfoxide, wie z.B. Dibenzylsulfoxid oder Diphenylsulfoxid; Carbonsäureester, wie z.B. Diethyl-acetamidomalonat, Dimethyl-2-aminoterephthalat, Ethyl(acetamidocyanacetat), Ethyl(2-amino-4-thiazolyl)-glyoxylat, Ethyloxamat oder Dimethylfumarat; aromatische Kohlenwasserstoffe, wie z.B. 1,1-H-Benzo(a)fluoren, 1,1-H-Benzo(b)fluoren, Anthracen, 2-Nitrofluoren oder [2.2]-Paracyclophan; sowie weitere geeignete polyfunktionelle Verbindungen, wie z.B. N-Acetyl-L-cystein, N-Actylglycin, Acetylmethylentriphenylphosphoran, 1,3-Cydohexadion, 1,3-Cyclopentadion, Desoxy-4-anisoin, 2,3-Diphenyl-2-cyclopropen-1-on, 1,5-Diphenylcarbazon, 9-Fluroenylmethyl-succinimidyl-carbonat, L-(+)-gulonsäure-y-lacton, N-Hippuryl-L-arginin, N-Hippuryl-L-phenylalanin, N-Acetyl-L-cystein, N-Acetylglycin, 2-Methyl-1,3-cyclohexandion oder 2-Methyl-1,3-cyclopentandion.

Bevorzugte feste Lösungsmittel sind Benzil, 4-Aminobenzophenon, 3,4-Dihydroxybenzaldehyd, 2-Methylbenzimidazol, Malonsäure, Acenaphthenchinon, N-Phenylharnstoff, Thioharnstoff, 4-Methylacetanilid, Diphenylsulfon, Dibenzylsulfoxid oder Anthracen. Besonders bevorzugt sind Malonsäure, N-Phenylharnstoff und insbesondere Dibenzylsulfoxid.

Geeignete feste organische Vorläuferverbindungen, welche durch Zersetzung Lösungsmittel freisetzen, sind z.B. Metallsalze von Carbonsäuren, wie z.B. Ca- oder Mn-Acetat oder Ba-Succinat. Diese Salze zersetzen sich thermisch zu Aceton bzw. Cyclopentanon und dem entsprechenden Metallcarbonat.

Erfindungsgemäss wird das Verfahren, in welchem direkt festes Lösungsmittel verwendet wird, bevorzugt.

Die organische Aufzeichnungsschicht befindet sich auf einer Unterlage bzw. einem Substrat in an sich beliebiger Form und kann sowohl als separate Schicht vorliegen als auch zusammen mit einem organischen Polymer/Bindemittelsystem kombiniert werden, wobei sich die kombinierte Schicht im letztgenannten Fall entweder auf einer Unterlage befindet oder selbst gleichzeitig die Funktion des Substrates übernimmt.

Als Unterlagen bzw. Substrate kommen beliebige Metalle, z.B. Metallplatten, -filme oder -folien aus z.B. Aluminium, Zink, Magnesium, Kupfer, Gold oder Legierungen dieser Metalle, ferner metallbedampfte Kunststofffolien, -filme oder -teile, z.B. aluminiumbedampfte Kunststoffe, ferner Glas, Keramik, Papier, Holz oder beliebige Kunststoffe in Frage.

Liegt die organische Aufzeichnungsschicht als separate Schicht vor, so wird das Aufzeichnungsmaterial zweckmässig im Vakuum auf die Unterlage aufgedampft. Wird sie mit einem Polymersystem kombiniert, so wird das organische Aufzeichnungsmaterial zweckmässig zusammen mit dem Polymer bzw. dem Bindemittel nach bekannten Verfahren fein vermischt, und das Gemisch wird dann auf eine geeignete Unterlage aufgetragen oder selbst verformt

Besteht der Schichtaufbau des Aufzeichnungsmaterials aus einer einzigen Schicht, so besteht diese aus einer oder mehreren definitionsgemässen organischen Verbindungen zweckmässig in fein verteilter Form, welche gegebenenfalls zusammen mit einem organischen Polymer bzw. Bindemittel kombiniert werden kann/können. Das Polymer/Bindemittel ist zweckmässig filmbildend, isolierend und, falls das Aufzeichnungsmaterial auf eine Unterlage/ein Substrat aufgetragen wird, adhäsiv. Je nach Anwendung ist das Polymer-/Bindemittelsystem löslich in organischen Lösungsmitteln oder in basischen Mischungen organischer Lösungsmittel, die gegebenenfalls Wasser enthalten. Besonders geeignet sind Bindemittel/Polymere auf der Basis von Polykondensations- und Polyadditionsprodukten, wie Polyamide, Polyurethane, Polyester, Epoxyharze, Phenoxyharze, Polyketone, Polycarbonate, Polyvinylketone, Polystyrole, Polyvinylcarbazole, Polyacrylamide, Polymethylmethacrylate, Polyvinylbutyrale, Polyvinylchloride sowie Copolymerisate, wie z.B. Styrol-Maleinsäureanhydrid-Copolymere oder Styrol-Methacrylsäure-Methacrylsäureester-Copolymere. Bevorzugt sind transparente Polymere/Bindemittel, wie z.B. Polycarbonate, Acrylharze, Alkydmelaminharze, Polymethylmethacrylate und Epoxyharze.

Das Aufzeichnungsmaterial kann auch durch Eintauchen des Substrats in eine möglichst konzentrierte Lösung (z.B. 20-70 %ig) in einem geeigneten, im erfindungsgemässen Verfahren inaktiven organischen Lösungsmittel, auf das Substrat aufgezogen werden.

Der Schichtaufbau kann auch aus mehreren Schichten bestehen. In diesem Fall werden bevorzugt auf eine Unterlage bzw. ein Substrat zuerst eine dünne lichtreflektierende Metallschicht, z.B. eine dünne Aluminiumfolie, und dann auf diese die erfindungsgemäss in Frage kommende organische Aufzeichnungsschicht aufgetragen. Die Information wird von der Seite der Aufzeichnungsschicht mit Licht geschrieben und abgelesen. Falls die Struktur umgekehrt ist, kann die Information von der Seite des Substrats aufgezeichnet und abgelesen werden. Ein derartiges System ist für das sogenannte Reflexionsverfahren beim Ablesen der Informationen besonders geeignet.

Die lichtreflektierende Schicht sollte so beschaffen sein, dass diese das beim Ablesen zum Abtasten verwendete Licht möglichst quantitativ reflektiert. Geeignete lichtreflektierende Materialien sind Metalle wie z.B. Aluminium, Gold, Rhodium, Nickel, Zinn, Blei, Wismut, Kupfer und dielektrische Spiegel. Die Dicke der lichtreflektierenden Schicht soll so gross sein, dass diese das zum Abtasten benutzte Licht möglichst vollständig reflektiert. Für diesen Zweck sind Spiegel mit hoher Reflexion bei der in Frage kommenden Wellenlänge vorteilhaft. Die Licht reflektierende Schicht weist vorteilhaft eine optisch glatte, ebene Oberfläche auf und ist an der Oberfläche so beschaffen, dass die Aufzeichnungsschicht darauf fest haftet.

Das Aufbringen der verschiedenen Schichten kann auch so durchgeführt werden, dass auf einer transparenten Unterlage bzw. dem Substrat zuerst eine transparente leitfähige Schicht als Elektrode, dann die organische Aufzeichnungsschicht und schliesslich auf diese eine dünne leitfähige Metallschicht aufgebracht wird. Ein derartiger Schichtaufbau ist für das Photoleitfähigkeitsverfahren beim Ablesen der Informationen besonders geeignet. Dabei ist die Form der beiden Elektroden zweckmässig so beschaffen, dass sie in Form eines dünnen Streifens (z.B. zwischen etwa 1 und einige 100 µm) mit lithographischer Technik oder mit Hilfe einer Maske hergestellt werden. Ausserdem können diese Elektroden untereinander so ausgerichtet sein, dass sie sich auf der unteren und oberen Schicht kreuzen. Eine derartige Anordnung ist für die Speicherung von Informationen z.B. auf sogenannten "Security Cards", "PROM (programmable read only memory)" oder "optical PWB (printed wiring board)" besonders vorteilhaft
Das Aufzeichnungsmaterial kann auch noch weitere Farbmittel, wie anorganische oder organische Pigmente oder polymerlösliche Farbstoffe, enthalten, die gegenüber der erfindungsgemäss vorgenommenen Lösungsmittelbehandlung inaktiv sind.

Das erfindungsgemässe Verfahren ist wie gesagt durch die Verwendung eines bei Raumtemperatur festen organischen Lösungsmittels oder einer festen organischen Vorläuferverbindung, welche jeweils in der Aufzeichnungsschicht enthalten sind und durch Laserstrahlen verdampft oder geschmolzen bzw. zum Lösungsmittel zersetzt werden, charakterisiert. Dabei kann das Lösungsmittel oder die Vorläuferverbindung mit dem Aufzeichnungsmaterial gleichmässig vermischt sein und somit eine einheitliche Aufzeichnungsschicht bilden. Das Lösungsmittel oder die Vorläuferverbindung können aber auch eine separate Schicht innerhalb der Aufzeichnungsschicht bilden, wobei diese separate Schicht entweder auf der freien Oberfläche des Aufzeichnungsmaterials oder vorzugsweise zwischen dem Aufzeichnungsmaterial und der reflektierenden Schicht bzw. dem Substrat liegt. Es sind auch Anordnungen mit mehreren Schichten z.B. des Typs Substrat/Lösungsmittel/Aufzeichnungsmaterial/Lösungsmittel/Aufzeichnungsmaterial möglich. Zwischen der Lösungsmittel- und der Aufzeichnungsschicht kann auch eine "Pufferschicht" ("Buffer Layer") aufgetragen werden, welche bei Raumtemperatur die Diffusion des Lösungsmittels blockiert.

Die Schichtdicke der Aufzeichnungsschicht kann in breitem Rahmen variieren und hängt u.a. auch vom Typ dieser Schicht ab. Wird das Aufzeichnungsmaterial durch Aufdampfen aufgetragen, so ist die Schicht vorzugsweise 500-5000 Å, insbesondere 1000-2500 Å, besonders bevorzugt etwa 1000 Å dick. Ist das Aufzeichnungsmaterial in einem polymeren Bindemittel, z.B. in einer Konzentration von bis zu 75 % Pigment, verteilt, so ist die bevorzugte Schichtdicke zwischen 0,5 und 5 µm, vorzugsweise 0,7 und 2,5 µm, und besonders bevorzugt ca. 1 µm. Wird die Schicht durch Eintauchen des Substrats in eine Lösung des Aufzeichnungsmaterials gebildet, ist sie vorzugsweise etwa 0,01 bis 2 µm dick. Die Konzentration des Aufzeichnungsmaterials in der Lösung ist dabei vorzugsweise im Bereich von etwa 20-70 Gew.%.

Wird das feste Lösungsmittel bzw. die feste Vorläuferverbindung in einer separaten Schicht aufgetragen, so ist diese Schicht vorzugsweise etwa 100 Å bis 2 µm dick, insbesondere 300 Å bis 1 µm und besonders bevorzugt etwa 500 Å dick.

Wie bereits oben gesagt, kann das Aufbringen der anmeldungsgemässen Aufzeichnungsschicht und der metallischen Reflexionsschichten durch Aufdampfen im Vakuum erfolgen. Das aufzubringende Material wird zunächst in ein geeignetes Gefäss gegebenenfalls mit einer Widerstandsheizung gefüllt und in eine Vakuumkammer gesetzt. Das zu bedampfende Substrat wird oberhalb des Gefässes mit dem aufzudampfenden Material in einen Halter eingesetzt Dieser ist so konstruiert, dass das Substrat gegebenenfalls rotiert (z.B. mit 50 Upm) und geheizt werden kann. Die Vakuumkammer wird auf etwa 1,3 · 10⁻⁵ bis 1,3 · 10⁻⁶ mbar (10⁻⁵ bis 10⁻⁶ Torr) evakuiert, und die Heizung wird so eingestellt, dass die Temperatur des aufzudampfenden Materials bis zu dessen Verdampfungstemperatur ansteigt. Die Verdampfung wird solange fortgesetzt, bis die aufgedampfte Schicht die gewünschte Dicke hat. Je nach Systemaufbau wird zuerst die organische Aufzeichnungsverbindung und dann die reflektierende Schicht aufgebracht, oder es kann umgekehrt verfahren werden. Auf das Aufbringen einer reflektierenden Schicht kann gegebenenfalls verzichtet werden.

Die Dicke der beim Aufdampfen aufwachsenden Schicht kann mit Hilfe bekannter Verfahren überwacht werden, z.B. mit Hilfe eines optischen Systems, welches während der Aufdampfung das Reflexionsvermögen der mit dem Absorptionsmaterial bedeckten Reflexionsoberfläche misst. Vorzugsweise wird das Wachsen der Schichtdicke mit einem Schwingquarz verfolgt.

Alle oben erwähnten Schichten können noch geeignete Zusätze, wie Egalisiermittel, oberflächenaktive Mittel oder Weichmacher, enthalten, um die physikalischen Eigenschaften der Schichten zu verbessern.

Die lokale Behandlung der organischen Aufzeichnungsschicht erfolgt im Kontakt mit einem organischen Lösungsmittel im flüssigen oder gasförmigen Zustand, wobei das Lösungsmittel eine Veränderung im Absorptionsspektrum der definitionsgemässen Verbindungen und/oder eine Veränderung ihrer Photoleitfähigkeit erzeugt. Dies geschieht dadurch, dass man die wie oben beschrieben erhaltene Aufzeichnungsschicht entsprechend der Form der zu markierenden Information einem Laserstrahl aussetzt, wobei das feste Lösungsmittel oder das durch Zersetzung der Vorläuferverbindung gebildete Lösungsmittel verdampft.

Geeignete Laser sind z.B. Diodenlaser, insbesondere Halbleiter-Diodenlaser, wie GaAsAl- oder GaAs-Laser einer Wellenlänge von 780 bzw. 830 nm sowie InGaAlP-Laser einer Wellenlänge von 650 nm oder Argon-Laser einer Wellenlänge von 514 nm.

Die Beschriftung kann punktuell (Punkt für Punkt) oder linienförmig erfolgen, wobei die verschiedensten Beschriftungsarten erhalten werden können. Beispiele hierfür sind sowohl visuelle als nicht visuelle Informationen bis im Micronbereich oder darunter, z.B. zwischen etwa 1 und 100 µm und mehr, wie variable Textprogrammierung von numerischen Zeichen, Textprogramme von Standardzeichen oder Sonderzeichen wie Namenszüge, Signete oder sich oft wiederholende Daten, fortlaufende Stückzahlnumerierung, Eingabe von Messgrössen, beliebige Zeichnungen oder Figuren, aber auch Dekorationen. Ein typisches Anwendungsbeispiel ist ein Photorezeptormuster von verschiedenen Figuren oder Bildern, welches nach konventionellen elektrophotographischen Verfahren mit integraler Belichtung funktioniert.

Das erfindungsgemässe Verfahren ermöglicht eine Beschriftung/Speicherung von Informationen mit hoher Zuverlässigkeit, welche deformationsstabil, licht- und wetterbeständig und gut lesbar sind, und saubere Randzonen haben. Ferner sind sie gegenüber Temperaturveränderungen und UV-Strahlen sehr beständig.

Wie oben bereits erwähnt, tritt nach dem vorliegenden Verfahren unter Lösungsmittelbehandlung an der (den) bestrahlten Stelle(n) des Materials eine Veränderung im Absorptionsspektrum und/oder eine Veränderung der Photoleitfähigkeit ein. Die Veränderung im Absorptionsspektrum bzw. die gespeicherte Information kann visuell, z.B. als Farbumschlag mit einem ausgeprägten Kontrast, z.B. mit einem Photodetektor-System im sichtbaren oder NIR-Bereich abgelesen werden.

Geeignete Photodetektor-Systeme umfassen z.B. energiearme Laser, z.B. Laserdioden kombiniert mit PIN-Dioden, die den Farbumschlag bzw. die Veränderung im Absorptionsspektrum erfassen können, ohne dass dabei die sich im Material befindliche(n) Information(en) zerstört wird(werden), ferner Spektrophotometer, welche die spektralen Aenderungen im UV-, sichtbaren oder NIR-Bereich der beschrifteten Schicht und die daraus resultierende Veränderung der Transmission, Reflexion oder Absorption messen können, wie z.B. ein UV/NIR Lambda 9 Spektrophotometer der Firma Perkin-Elmer oder ein UMSP 80 Mikroskop-Spektrophotometer der Firma Carl Zeiss.

Mit den erfindungsgemäss in Frage kommenden Chinacridonen, Chinacridonchinonen, Phthalocyaninen, Monoketomonothioketo- und Dithioketopyrrolopyrrolen erfolgt die spektrale Veränderung im NIR-Bereich, währenddem die Absorptionsänderung der Diketopyrrolopyrrol-Derivate im sichtbaren Bereich erfolgt.

Z.B. zeigt 1,4-Diketo-3,6-diphenyl-pyrrolo-[3,4-c]-pyrrol (DPP) nach Behandlung eine visuelle Farbveränderung von rot nach orange (Erhöhung der Intensität der Absorption bei 450 nm), das entsprechende 1,4-Dithioketo-Derivat eine spektrale Veränderung von etwa 690 nm auf etwa 830 nm, Dithiochinacridon [vgl. obige Formel I; a und b = H; Z = S] eine spektrale Veränderung von 700 nm auf 770 nm und Vanadylphthalocyanin eine Erhöhung der Intensität der Absorption bei 820 nm.

Wird die Information mittels Reflexion abgelesen, so ist es zweckmässig, zwischen dem Substrat und der erfindungsgemässen organischen Aufzeichnungsschicht eine möglichst vollständig reflektierende Schicht einzubauen, z.B. eine dünne Metallfolie z.B. aus Aluminium, Gold, Platin oder Silber. Diese Schicht kann geklebt, insbesondere aber aufgedampft werden.

Bei Verwendung von Verbindungen der Formel III, insbesondere aber von DTPP (1,4-Dithio-3,6-diphenyl-pyrrolo-[3,4-c]-pyrrol), kann die Veränderung der Reflexion dadurch verbessert werden, dass man derartige Verbindungen mit einer Säure vorbehandelt Die Säurebehandlung kann unmittelbar vor der Ausfällung der in Frage kommenden DTPP-Verbindung durchgeführt werden, oder man bringt die ausgefällte DTPP-Verbindung wieder in Lösung und gibt dann die Säure der Lösung zu. Eine derartige Vorbehandlung führt dazu, dass das Absorptionsspektrum der obigen Verbindungen der Formel III verändert wird bzw. die Absorption der Verbindungen im spektralen Bereich 700-800 nm abnimmt, was nach der erfindungsgemässen Lösungsmittelbehandlung zu einer noch grösseren Absorptionsveränderung führt

Eine aufgedampfte DTPP-Schicht zeigt z.B.eine Absorptionsschulter zwischen etwa 770 und 800 nm. Wird DTPP (z.B. in einem organischen Lösungsmittel gelöst) mit einer Säure behandelt und dann ausgefällt oder umkristallisiert, so verändert sich das Absorptionsspektrum dieser Verbindung insofern, dass die Schulter zwischen 770-800 nm vollständig verschwindet. Der dann nach der erfindungsgemässen Lösungsmittelbehandlung gemessene Reflexionsunterschied kann somit von etwa 30 % bis auf 80 % und mehr verbessert werden.

Eine derartige Vorbehandlung mit einer Säure erfolgt zweckmässig durch Lösen einer Verbindung der Formel III in einem organischen Lösungsmittel und anschliessende Zugabe einer Säure. Nach Stehenlassen der so erhaltenen Lösung, zweckmässig zwischen 1 Minute und zwei Stunden, wird die Lösung auf Eis oder in Eis/Wasser gegossen oder umkristallisiert. Das ausgefallene Produkt wird dann nach üblichen Verfahren isoliert und getrocknet, z.B. durch Filtration und anschliessendes Trocknen, z.B. bei 50°C unter Vakuum. Die so vorbehandelte Verbindung kann dann wie oben bereits angegeben als Aufzeichnungsschicht präpariert werden.

Für diese Vorbehandlung geeignete Lösungsmittel sind z.B. Ketone, insbesondere aliphatische Ketone, wie Aceton, Methylethylketon und Methylisobutylketon, oder Cyclohexanon, aliphatische Alkohole, wie Methanol, Ethanol oder Isopropanol, aliphatische Ether oder Ester, wie z.B. Diethylether oder Ethylacetat, ferner Tetrahydrofuran, Glykolether, wie Ethylenglykolmonoethyl- oder -monomethylether oder Diethyl- oder Dimethylglykolether, ferner 1-Acetoxy-2-ethoxy-ethan, sowie polare Lösungsmittel, wie Acetonitril, Formamid, Dimethylformamid, Dimethylsulfoxid, N-Methylpyrrolidon oder Dimethylacetamid, sowie Gemische der oben erwähnten Flüssigkeiten.

Bevorzugte Lösungsmittel sind z.B. Aceton, Ethanol, N-Methylpyrrolidon und 1-Acetoxy-2-ethoxy-ethan, vor allem aber Dimethylformamid und insbesondere Dimethylsulfoxid (DMSO).

Geeignete Säuren sind organische oder anorganische Säuren, wie z.B. Ameisensäure, Essigsäure oder Propionsäure, Mono-, Di- oder Trichloressigsäure, Oxalsäure, Malonsäure, Bernsteinsäure, Phthalsäure, Benzol- oder Toluolsulfonsäure, ferner Phosphorsäure, Salpetersäure, Salzsäure oder Schwefelsäure. Bevorzugt sind z.B. Ameisensäure, Essigsäure, Salzsäure und Phosphorsäure, vor allem aber Salpetersäure und insbesondere Schwefelsäure.

Zweckmässig liegt die Säurekonzentration z.B. zwischen 10⁻⁶ und 10⁻² M (molar), besonders aber zwischen 10⁻⁵ und 10⁻³ M.

Erfindungsgemäss ganz bevorzugt ist das System DTPP, das mit H₂SO₄, bevorzugt in etwa 2·10⁻⁴ molarer Konzentration, vorbehandelt wird.

Für das Ablesen der Information bei Transmission ist eine transparente Substratschicht zweckmässig, z.B. eine Polymethylmethacrylat- oder Polycarbonatschicht oder Glas.

Eine durch Lösungsmittelbehandlung erzeugte Veränderung der Photoleitfähigkeit kann mit einem eingebauten Messelektrodensystem gemessen werden.

Für das Ablesen der Information aufgrund der Photoleitfähigkeit verwendet man zweckmässig Aufzeichnungsmaterialien aus mehreren Schichten, z.B. indem auf dem transparenten Substrat zuerst eine leitfähige Unterlage als transparente Elektrode aufgetragen wird, darauf dann die erfindungsgemäss in Frage kommende organische Schicht und schliesslich eine zweite leitfähige Unterlage als Messelektrode aufgebracht werden.

Transparente Elektroden werden bevorzugt aufgedampft und sind z.B. aus Indiumoxid, Indium-Zinnoxid, Zinnoxid dotiert mit Antimon, Zinkoxid oder metallisierten organischen Filmen.

Messelektroden sind z.B. aus Al, Ni, Au oder Ag und liegen zweckmässig als dünne Folien vor.

Optische Aufzeichnungsträger enthaltend ein Substrat und eine erfindungsgemässe Aufzeichnungsschicht sind neu und sind ebenfalls Gegenstand vorliegender Erfindung.

Ein weiterer Gegenstand der Erfindung ist das beschriftete Material, welches nach dem erfindungsgemässen Verfahren erhältlich ist.

Die folgenden Beispiele erläutern die Erfindung.

Beispiel 1: Aluminium wird unter Hochvakuum von ca. 3.2 x 10⁻⁴ Pa (3,2 x 10⁻⁶ Torr) auf ein in einer Schichtdicke von etwa 2000 Å Glassubstrat aufgedampft. Die Aufdampfgeschwindigkeit beträgt etwa 50 Å/s. Danach wird unter den gleichen Bedingungen Dibenzylsulfoxid (Fluka) auf das Al-beschichtete Substrat aufgedampft, und anschliessend wird auf die gleiche Art 1,4-Dithioketo-3,6-diphenyl-pyrrolo-[3,4-c]-pyrrol (DTPP) aufgedampft. Die Schichtdicke von Dibenzylsulfoxid bzw. DTPP beträgt 500 bzw. 1500 Å. Elektronische Information wird punktweise unter Verwendung eines GaAs Diodenlasers von 830 nm mit 20 mW (Toshiba) beschriftet, und die Reflexion wird bei der gleichen Wellenlänge mit einer PIN-Diode gemessen. Die Reflexion vor und nach der Beschriftung beträgt 80 % bzw. 8 %.

Beispiel 2: Das Vorgehen gemäss Beispiel 1 wird wiederholt, indem statt DTPP Titanylphthalocyanin (TiOPc) verwendet wird. Vor bzw. nach der Beschriftung mit einem Diodenlaser von 830 nm wird eine Reflexion von 50 % bzw. 16 % gemessen.

Beispiel 3: Beispiel 1 wird wiederholt, indem DTPP durch Vanadylphthalocyanin (VOPc), (Kodak) ersetzt wird. Statt Dibenzylsulfoxid wird aber N-Phenyl-harnstoff (Fluka) aufgedampft. Es wird eine Reflexion von 35 % bzw. 10 % vor und nach der Beschriftung mit einem Diodenlaser von 830 nm gemessen.

Beispiel 4: Beispiel 1 wird mit den folgenden Aenderungen wiederholt: Magnesiumphthalocyanin (Tokyo Kasei) wird statt DTPP eingesetzt; die Beschriftung erfolgt punktweise mit einem GaAsAl Diodenlaser von 780 nm und die Reflexion wird mit 66 % vor und 3 % nach der Beschriftung gemessen.

Beispiel 5: Malonsäure wird durch Eintauchen eines Al/Polycarbonat-Substrats in eine 8 %ige Ethanollösung auf das Substrat aufgetragen. Danach wird DTPP in einer Schichtdicke von ca. 1000 Å aufgedampft. Elektronische Information wird mit einem Diodenlaser von 780 nm aufgezeichnet. Die Reflexion vor und nach der Beschriftung beträgt 68 % bzw. 3 %.

Beispiel 6: Beispiel 1 wird mit den folgenden Aenderungen wiederholt: 1-Keto-4-thioketo-3,6-diphenylpyrrolo-[3,4-c]-pyrrol wird statt DTPP aufgedampft; die Beschriftung erfolgt mit einem Ar-Laser von 514 nm; die Reflexion wird bei 700 nm mit einem Mikroskop-Spektrophotometer (UMSP 80, Carl Zeiss) gemessen. Vor bzw. nach der Beschriftung wird eine Reflexion von 70 % bzw. 18 % gemessen.

Beispiel 7: Beispiel 1 wird mit den folgenden Änderungen wiederholt. Gold, Epoxy-Substrat und unsubstituiertes Chinacridon (ca. 1000 Å) werden statt Al, Glassubstrat und DTPP eingesetzt. Die Aufzeichnung erfolgt Punkt für Punkt mit einem GaAsAl Diodenlaser von 780 nm und die Reflexion wird mit 83 % vor und 10 % nach der Beschriftung gemessen.

Beispiel 8: Eine Polymerschicht von ca. 1 µm bestehend aus Polycarbonat und Dibenzylsulfoxid (ca. 8 Gew.%) wird mit einer Belackungsanlage unter Verwendung von Tetrahydrofuran als Lösungsmittel auf ein Au/Glassubstrat aufgetragen. Nachher wird DTPP in einer Schicht von ca. 1000 Å unter Vakuum aufgedampft. Elektronische Information wird mit einem Diodenlaser von 780 nm aufgezeichnet. Die Reflexion vor und nach der Beschriftung beträgt 73 % und 18 %.

## Patentansprüche

1. Verfahren zur Speicherung von Informationen in einer organischen Aufzeichnungsschicht durch lokale Behandlung mit einem organischen Lösungsmittel entsprechend der Form der zu markierenden Information um ihr Absorptionsspektrum und/oder ihre Photoleitfähigkeit so zu verändern, dass an den behandelten Stellen dieser Schicht Informationen erzeugt bzw. gespeichert werden, dadurch gekennzeichnet, dass das organische Lösungsmittel bei Raumtemperatur fest und in der Aufzeichnungsschicht enthalten ist, und dass das Lösungsmittel entsprechend der Form der zu markierenden Information unter Einwirkung von Laserstrahlen verdampft wird oder schmilzt.

2. Verfahren zur Speicherung von Informationen in einer organischen Aufzeichnungsschicht durch lokale Behandlung mit einem organischen Lösungsmittel entsprechend der Form der zu markierenden Information um ihr Absorptionsspektrum und/oder ihre Photoleitfähigkeit so zu verändern, dass an den behandelten Stellen dieser Schicht Informationen erzeugt bzw. gespeichert werden, dadurch gekennzeichnet, dass das organische Lösungsmittel durch photochemische und/oder thermische Zersetzung einer festen, in der Aufzeichnungsschicht enthaltenen organischen Vorläuferverbindung gebildet wird und dass diese Zersetzung entsprechend der Form der zu markierenden Information unter Einwirkung von Laserstrahlen erfolgt.

3. Verfahren nach Anspruch 1 oder 2, dadurch gekennzeichnet, dass die Aufzeichnungsschicht ein Chinacridon, ein Dithiochinacridon, ein Chinacridonchinon, ein Phthalocyanin, ein Diketo-, Monoketomonothioketo- oder Dithioketo-pyrrolopyrrol enthält.

4. Verfahren nach Anspruch 3, dadurch gekennzeichnet, dass man als Chinacridon oder Dithiochinacridon Verbindungen der Formeln I oder II 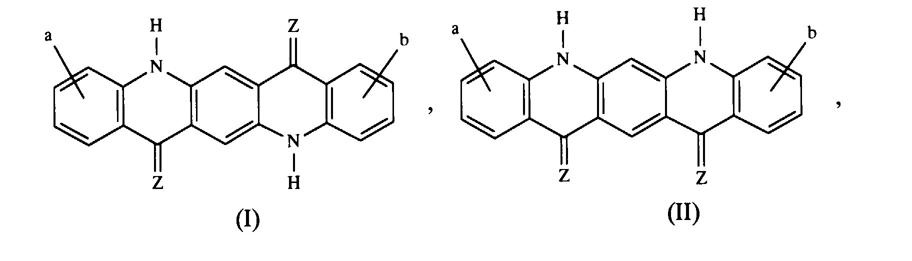 verwendet, worin a und b -H, -F, -Cl, -Br, -CH₃ oder -OCH₃ sind, und Z für O oder S steht

5. Verfahren nach Anspruch 4, worin in den Formeln I und II a und b -H und Z S bedeuten.

6. Verfahren nach Anspruch 3, dadurch gekennzeichnet, dass als Diketo-, Monoketomonothioketo- bzw. Dithioketo-pyrrolopyrrole Verbindungen der Formel III 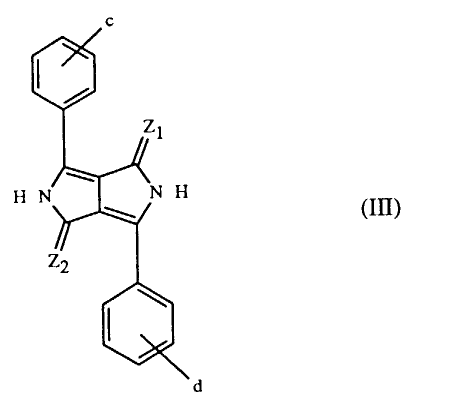 verwendet werden, worin Z₁ und Z₂ unabhängig voneinander O oder S bedeuten, und c und d unabhängig voneinander -H, -Cl, -Br, -CH₃, -OCH₃, -N(CH₃)₂, -SC₆H₅ oder -S-Alkyl mit 1 bis 12 C-Atomen sind.

7. Verfahren nach Anspruch 6, wobei Z₁ und Z₂ S bedeuten.

8. Verfahren nach Anspruch 6, wobei Z₁ und Z₂ S und c und d -H sind.

9. Verfahren nach Anspruch 1 oder 2, dadurch gekennzeichnet, dass die Aufzeichnungsschicht auf eine dünne lichtreflektierende Metallschicht aufgetragen wird, die ihrerseits auf einer Unterlage bzw. einem Substrat aufgetragen ist.

10. Verfahren nach Anspruch 1 oder 2, dadurch gekennzeichnet, dass eine transparente Unterlage bzw. ein Substrat verwendet wird und auf der Unterlage zuerst eine transparente leitfähige Schicht als Elektrode, dann darauf die Aufzeichnungsschicht und anschliessend eine dünne leitfähige Metall-Schicht aufgebracht sind.

11. Verfahren nach Anspruch 1 oder 2, dadurch gekennzeichnet, dass das organische Lösungsmittel oder die organische Vorläuferverbindung eine separate Schicht innerhalb der Aufzeichnungsschicht bildet.

12. Verfahren nach Anspruch 11, dadurch gekennzeichnet, dass die separate Schicht auf eine dünne Metallschicht aufgetragen wird, die ihrerseits auf einer Unterlage bzw. einem Substrat aufgetragen ist, oder dass die separate Schicht direkt auf einer Unterlage bzw. einem Substrat aufgetragen ist.

13. Verfahren nach Anspruch 1, dadurch gekennzeichnet, dass das organische Lösungsmittel Benzil, 4-Aminobenzophenon, 3,4-Dihydroxybenzaldehyd, 2-Methylbenzimidazol, Malonsäure, Acenaphthenchinon, N-Phenylharnstoff, Thioharnstoff, 4-Methylacetanilid, Diphenylsulfon, Dibenzylsulfoxid oder Anthracen ist.

14. Verfahren nach Anspruch 1 oder 2, dadurch gekennzeichnet, dass die durch Lösungsmittelbehandlung erzeugte spektrale Veränderung im Absorptionsspektrum bzw. die gespeicherte Information mit einem Microdetektor abgelesen wird.

15. Verfahren nach Anspruch 1 oder 2, dadurch gekennzeichnet, dass die durch Lösungsmittelbehandlung erzeugte Veränderung der Photoleitfähigkeit mit einem eingebauten Elektrodensystem gemessen wird.

16. Verfahren nach Anspruch 1 oder 2, dadurch gekennzeichnet, dass die die Informationen enthaltende Aufzeichnungsschicht als Photorezeptormuster verwendet wird.

17. Optischer Aufzeichnungsträger enthaltend ein Substrat und eine Aufzeichnungsschicht nach Anspruch 1 oder 2.

18. Beschriftetes Material erhältlich nach dem Verfahren gemäss Anspruch 1 oder 2.

## Claims

1. A process for storing information in an organic recording layer by treating it locally with an organic solvent in accordance with the form of the information to be marked in order to change its absorption spectrum and/or its photoconductivity such that information can be produced or stored at the treated areas of said layer, wherein the organic solvent is solid at room temperature and is present in the recording layer, and said solvent is vapourised or melts by the action of laser beams in accordance with the form of the information to be marked.

2. A process for storing information in an organic recording layer by treating it locally with an organic solvent in accordance with the form of the information to be marked in order to change its absorption spectrum and/or its photoconductivity such that information can be produced or stored at the treated areas of said layer, wherein the organic solvent is formed by photochemical and/or thermal decomposition of a solid organic precursor present in the recording layer, which decomposition is effected by the action of laser beams in accordance with the form of the information to be marked.

3. A process according to claim 1 or 2, wherein the recording layer contains a quinacridone, a dithioquinacridone, a quinacridonequinone, a phthalocyanine, a diketo-, monoketomonothioketo- or dithioketopyrrolopyrrole.

4. A process according to claim 3, wherein the quinacridone or dithioquinacridone used is a compound of formula I or II 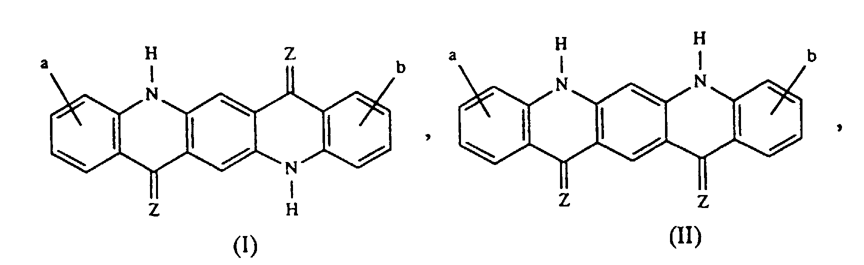 wherein a and b are -H, -F, -cl, -Br, -CH₃ or -oCH₃, and Z is O or s.

5. A process according to claim 4, wherein a and b are -H and Z is S in formulae I and II.

6. A process according to claim 3, wherein the diketo-, monoketomonothioketo- or dithioketopyrrolopyrrole used is a compound of formula III 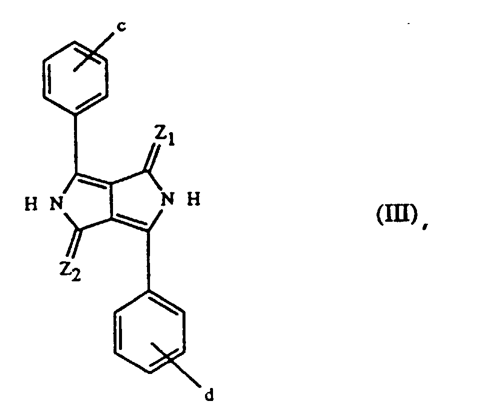 wherein Z₁ and Z₂ are each independently of the other O or S, and c and d are each independently of the other -H, -cl, -Br, -CH₃, -oCH₃, -N(CH₃)₂, -SC₆H₅ or -S-alkyl of 1 to 12 carbon atoms.

7. A process according to claim 6, wherein Z₁ and Z₂ and S.

8. A process according to claim 6, wherein Z₁ and Z₂ are S and c and d are -H.

9. A process according to claim 1 or 2, wherein the recording layer is applied to a thin light-reflecting metal layer which in turn is applied to a support or a substrate.

10. A process according to claim 1 or 2, wherein a transparent support or a substrate is used to which is first applied a transparent conductive layer as electrode, then thereon the recording layer, and then a thin conductive metal layer.

11. A process according to claim 1 or 2, wherein the organic solvent or the organic precursor forms a separate layer within the recording layer.

12. A process according to claim 11, wherein the separate layer is applied to a thin metal layer which in turn is applied to a support or a substrate, or the separate layer is applied direct to a support or a substrate.

13. A process according to claim 1, wherein the organic solvent is benzil, 4-aminobenzophenone, 3,4-dihydroxybenzaldehyde, 2-methylbenzimidazole, malonic acid, acenaphthenequinone, N-phenylurea, thiourea, 4-methylacetanilide, diphenyl sulfone, dibenzyl sulfoxide or anthracene.

14. A process according to claim 1 or 2, wherein the spectral change in the absorption spectrum, produced by the solvent treatment, and the recorded information is read out by a microdetector.

15. A process according to claim 1 or 2, wherein the change in photoconductivity, produced by the solvent treatment, is measured with a built-in electrode system.

16. A process according to claim 1 or 2, wherein the recording layer containing the information is used as a photoreceptor pattern.

17. An optical recording medium comprising a substrate and a recording layer according to claim 1 or 2.

18. An inscribed material obtainable by a process according to claim 1 or 2.

## Revendications

1. Procédé de stockage des informations dans une couche d'enregistrement organique par traitement local par un solvant organique de façon correspondante à la forme de l'information à marquer pour changer son spectre d'absorption et/ou sa photoconductivité, de façon telle que sur les endroits traités de cette couche on produise, respectivement on stocke de l'information, caractérisé en ce que le solvant organique est solide à la température ambiante et il est contenu dans la couche d'enregistrement, et en ce que le solvant est évaporé ou fondu de façon correspondante à la forme de l'information à marquer sous l'effet des rayonnements laser.

2. Procédé de stockage des informations dans une couche d'enregistrement organique par traitement local par un solvant organique conformément à la forme de l'information à marquer pour changer son spectre d'absorption et/ou sa photoconductivité, de façon telle que sur les endroits traités de cette couche soient formées, respectivement stockées des informations, caractérisé en ce que le solvant organique est formé par décomposition photochimique et/ou thermique d'un composé précurseur organique solide contenu dans la couche d'enregistrement, et en ce que cette décomposition est effectuée conformément à la forme de l'information à marquer sous l'effet d'un rayonnement laser.

3. Procédé selon la revendication 1 ou 2, caractérisé en ce la couche d'enregistrement contient une quinacridone, une dithioquinacridone, une quinacridonequinone, une phtalocyanine, un dicéto-, un monocéto-, monothiocéto- ou un dithiocéto-pyrrolopyrrole.

4. Procédé selon la revendication 3, caractérisé en ce qu'on utilise en tant que quinacridone ou dithioquinacridone des composés de formules I ou II 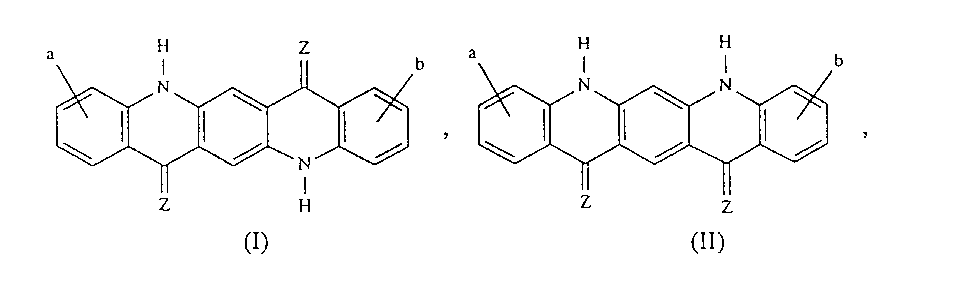 dans lesquelles a et b représentent -H, -F, -Cl, -Br, -CH₃ ou -OCH₃ et Z représente à O ou S.

5. Procédé selon la revendication 4, où dans les formules I et II a et b représentent - H et Z représente S.

6. Procédé selon la revendication 3, caractérisé en ce qu'on utilise en tant que composés de dicéto-, de monocétomonothiocéto-, respectivement de dithiocétopyrrolopyrrole de formule III 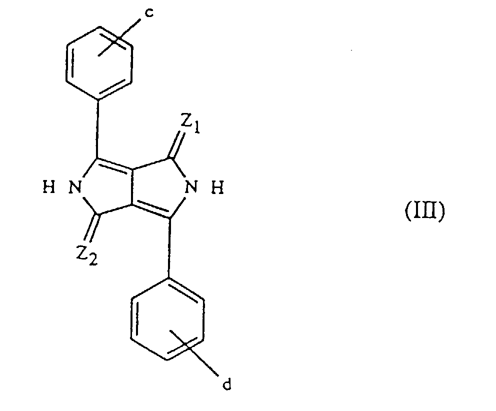 où Z₁ et Z₂ indépendamment l'un de l'autre représentent O ou S et c et d indépendamment l'un de l'autre représentent -H, -Cl, -Br, -CH₃, -OCH₃, -N(CH₃)₂, -SC₆H₅ ou -S-alkyle ou S-alkyle avec 1 à 12 atomes de carbone.

7. Procédé selon la revendication 6, où Z₁ et Z₂ représentent S.

8. Procédé selon la revendication 6, où Z₁ et Z₂ représentent S et c et d sont H.

9. Procédé selon la revendication 1 ou 2, caractérisé en ce que la couche d'enregistrement est déposée sur une mince couche de métal réfléchissant la lumière, qui de son côté, est déposée sur un fond, respectivement sur un substrat.

10. Procédé selon la revendication 1 ou 2, caractérisé en ce qu'on utilise un fond, respectivement un substrat transparent et on dépose sur le fond d'abord une couche transparente conductrice comme électrode, puis sur celle-ci, la couche d'enregistrement et ensuite une couche métallique mince conductrice.

11. Procédé selon la revendication 1 ou 2, caractérisé en ce que le solvant organique ou le composé précurseur organique forme une couche séparée à l'intérieur de la couche d'enregistrement.

12. Procédé selon la revendication 11, caractérisé en ce que la couche séparée est déposée sur une couche métallique mince, qui de son côté est déposée sur un fond respectivement un substrat, ou en ce que la couche séparée est déposée directement sur le fond, respectivement sur un substrat.

13. Procédé selon la revendication 1, caractérisé en ce que le solvant organique est le benzile, la 4-aminobenzophénone, le 3,4-dihydroxybenzaldéhyde, le 2-méthylbenzimidazole, l'acide malonique, l'acénaphtenquinone, la N-phénylurée, la thio-urée, le 4-méthylacétanilide, la diphénylsulfone, le dibenzylsulfoxyde ou l'anthracène.

14. Procédé selon la revendication 1 ou 2, caractérisé en ce que le traitement au solvant a donné un changement spectral dans le spectre d'absorption respectivement les informations stockées sont lues à l'aide d'un microdétecteur.

15. Procédé selon la revendication 1 ou 2, caractérisé en ce que le traitement au solvant a donné un changement de la photoconductivité mesuré à l'aide d'un système d'électrodes incorporé.

16. Procédé selon la revendication 1 ou 2, caractérisé en ce que la couche d'enregistrement contenant les informations est utilisée comme modèle photorécepteur.

17. Support d'enregistrement optique contenant un substrat et une couche d'enregistrement selon la revendication 1 ou 2.

18. Matière inscrite que l'on peut obtenir selon le procédé selon la revendication 1 ou 2.
